# EUROPEAN PATENT APPLICATION

(11) **EP 3 581 293 A1**
(43) Date of publication of application: **18.12.2019**
(21) Application number: 19162364.4
(22) Date of filing: 12.03.2019
(51) Int. Cl.: B22C 7/02, B22C 9/10, B22C 9/24, F01D 5/18

(54) **METHOD FOR CASTING COOLING HOLES FOR AN INTERNAL COOLING CIRCUIT OF A GAS TURBINE ENGINE COMPONENT**

(30) Priority: 11.06.2018 US 201816004692
(71) Applicant: United Technologies Corporation, Farmington, CT 06032 (US)
(72) Inventor: GHIGLIOTTY, Jaime G, 00623 Cabo Rojo (PR); DOWNEY, James B, Manchester, CT Connecticut 06042 (US)
(74) Representative: Dehns

(57) **Abstract**

A core assembly (200) for casting an internal cooling circuit within a gas turbine engine component including a core portion (400) having a recess and a cooling hole solid (404) that is at least partially received into the recess.

## Description

### BACKGROUND

The present disclosure relates to a core for an airfoil and, more particularly, to a core portion having a cooling hole solid that is at least partially received into a recess in a core portion for use in casting an internal cooling circuit within a gas turbine engine component.

Gas turbine engines typically include a compressor section to pressurize airflow, a combustor section to burn a hydrocarbon fuel in the presence of the pressurized air, and a turbine section to extract energy from the resultant combustion gases. In typical engine applications, the gas path temperatures within the high pressure turbine can exceed the melting point of the gas path components. These components thus often include airfoil cooling that may be accomplished by external film cooling, internal air impingement, and forced convection either separately or in combination.

Film cooling has been incorporated into airfoil cooling scheme designs for operations within these operational temperatures. The film cooling is discharged through small holes in the airfoil walls providing a thin, cool, and insulating air blanket along the external surface of the airfoil. Various advance cooling hole shapes may be challenging to manufacture.

### SUMMARY

A core assembly for casting an internal cooling circuit within a gas turbine engine component according to one disclosed non-limiting embodiment of the present disclosure includes a core portion having a recess; and a cooling hole solid that is at least partially received into the recess.

A further aspect of the present disclosure includes that the core portion is manufactured of a first material and the cooling hole solid is manufactured of a second material, the first material different than the second material.

A further aspect of the present disclosure includes that the cooling hole solid is manufactured of a refractory metal.

A further aspect of the present disclosure includes that the cooling hole solid is manufactured of at least one of molybdenum, aluminum oxide, silicon dioxide, and quartz.

A further aspect of the present disclosure includes that the cooling hole solid is press fit into the recess.

A further aspect of the present disclosure includes that the cooling hole solid is interference fit into the recess.

A further aspect of the present disclosure includes an alignment feature to align the cooling hole solid with respect to the recess.

A further aspect of the present disclosure includes that the alignment feature rotationally aligns the cooling hole solid within the recess.

A further aspect of the present disclosure includes a tripod hole geometry.

A further aspect of the present disclosure includes that the cooling hole solid is glued into the recess.

A core assembly for casting an internal cooling circuit within a gas turbine engine component according to one disclosed non-limiting embodiment of the present disclosure includes a core portion for forming an internal cooling circuit within a component, the core portion having a multiple of recesses; and a multiple of cooling hole solids for forming a respective cooling hole from the internal cooling circuit, each of the multiple of cooling hole solids at least partially received into one of the multiple of recesses such that each of the cooling hole solids are aligned to a predefined rotational position.

A further aspect of the present disclosure includes an alignment feature that rotationally positions the cooling hole solid within the recess to the predefined rotational position.

A further aspect of the present disclosure includes that the alignment feature is a step feature.

A further aspect of the present disclosure includes that the alignment feature is a regular convex polygon.

A further aspect of the present disclosure includes a tripod hole geometry.

A further aspect of the present disclosure includes that each cooling hole solid is glued into the respective recess.

A method of manufacturing a core assembly for casting an internal cooling circuit within a gas turbine engine component according to one disclosed non-limiting embodiment of the present disclosure includes forming a core portion for forming an internal cooling circuit within a component; forming a multiple of recesses within the core portion; and locating a cooling hole solid into each of the multiple of recesses, each of the cooling hole solids for forming a respective cooling hole from the internal cooling circuit.

A further aspect of the present disclosure includes rotationally aligning each of the cooling hole solids such that each of the cooling hole solids are aligned to a predefined rotational position.

A further aspect of the present disclosure includes gluing the cooling hole solid into the recess.

A further aspect of the present disclosure includes additively manufacturing the core portion with the multiple of recesses.

The foregoing features and elements may be combined in various combinations without exclusivity, unless expressly indicated otherwise. These features and elements as well as the operation thereof will become more apparent in light of the following description and the accompanying drawings. It should be appreciated, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a schematic cross-section of an example gas turbine engine architecture.
FIG. 2 is an enlarged schematic cross-section of an engine turbine section.
FIG. 3 is a perspective view of an airfoil as an example component.
FIG. 4 is a schematic cross-section view of the airfoil of FIG. 4 showing an example internal architecture.
FIG. 5 is a perspective view of a core assembly for the airfoil of FIG. 4.
FIG. 6 is a schematic partial fragmentary view of a mold for the airfoil of FIG. 4.
FIG. 7 is a flow chart illustrating a method to cast the airfoil of FIG. 4 according to one disclosed non-limiting embodiment.
FIG. 8 is a perspective view of the core portion for the airfoil of FIG. 4.
FIG. 9 is a perspective view of one example cooling hole solid for the core assembly shown in FIG. 5.
FIG. 10 is a perspective view of one example cooling hole solid with an anti-rotation feature according to one disclosed non-limiting embodiment.
FIG. 11 is a perspective view of another example cooling hole solid with an anti-rotation feature according to another disclosed non-limiting embodiment.
FIG. 12 is a perspective view of a cluster of cooling hole solids according to one disclosed non-limiting embodiment.

### DETAILED DESCRIPTION

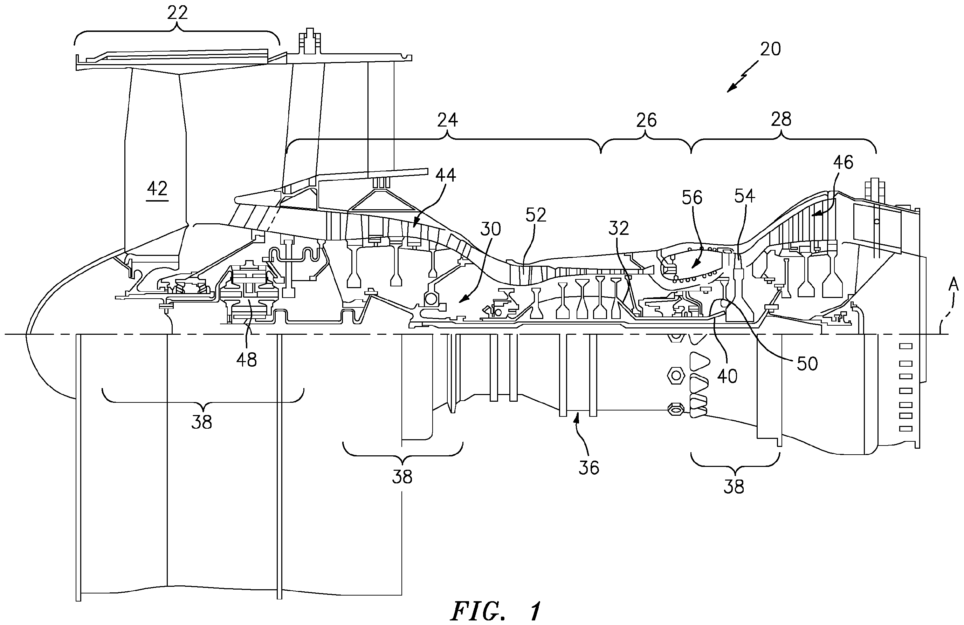

FIG. 1 schematically illustrates a gas turbine engine 20. The gas turbine engine 20 is disclosed herein as a two-spool turbo fan that generally incorporates a fan section 22, a compressor section 24, a combustor section 26 and a turbine section 28. The fan section 22 drives air along a bypass flowpath while the compressor section 24 drives air along a core flowpath for compression and communication into the combustor section 26 then expansion through the turbine section 28. Although depicted as a turbofan in the disclosed non-limiting embodiment, it should be appreciated that the concepts described herein are not limited to use with turbofans as the teachings may be applied to other types of turbine engine architectures such as turbojets, turboshafts, and three-spool (plus fan) turbofans.

The engine 20 generally includes a low spool 30 and a high spool 32 mounted for rotation about an engine central longitudinal axis X relative to an engine static structure 36 via several bearing structures 38. The low spool 30 generally includes an inner shaft 40 that interconnects a fan 42, a low pressure compressor ("LPC") 44 and a low pressure turbine ("LPT") 46. The inner shaft 40 drives the fan 42 directly or through a geared architecture 48 to drive the fan 42 at a lower speed than the low spool 30. An exemplary reduction transmission is an epicyclic transmission, namely a planetary or star gear system.

The high spool 32 includes an outer shaft 50 that interconnects a high pressure compressor ("HPC") 52 and high pressure turbine ("HPT") 54. A combustor 56 is arranged between the high pressure compressor 52 and the high pressure turbine 54. The inner shaft 40 and the outer shaft 50 are concentric and rotate about the engine central longitudinal axis X which is collinear with their longitudinal axes.

Core airflow is compressed by the LPC 44 then the HPC 52, mixed with the fuel and burned in the combustor 56, then expanded over the HPT 54 and the LPT 46. The turbines 54, 46 rotationally drive the respective low spool 30 and high spool 32 in response to the expansion. The main engine shafts 40, 50 are supported at a plurality of points by bearing structures 38 within the static structure 36. It should be appreciated that various bearing structures 38 at various locations may alternatively or additionally be provided.

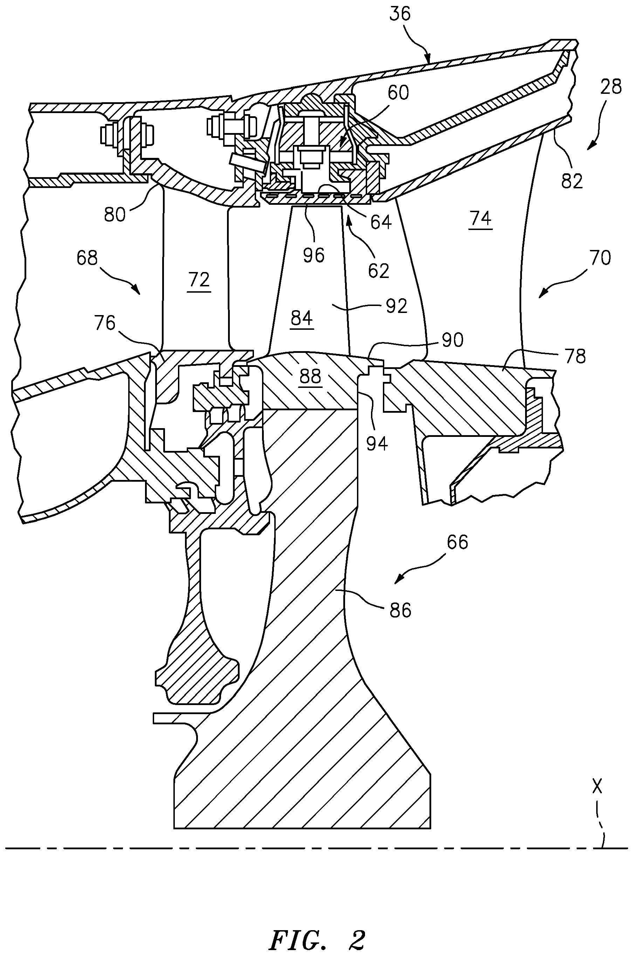

With reference to FIG. 2, an enlarged schematic view of a portion of the turbine section 28 is shown by way of example; however, other engine sections will also benefit herefrom. A full ring shroud assembly 60 within the engine case structure 36 supports a blade outer air seal (BOAS) assembly 62 with a multiple of circumferentially distributed BOAS 64 proximate to a rotor assembly 66 (one schematically shown).

The full ring shroud assembly 60 and the BOAS assembly 62 are axially disposed between a forward stationary vane ring 68 and an aft stationary vane ring 70. Each vane ring 68, 70 includes an array of vanes 72, 74 that extend between a respective inner vane platform 76, 78 and an outer vane platform 80, 82. The outer vane platforms 80, 82 are attached to the engine case structure 36.

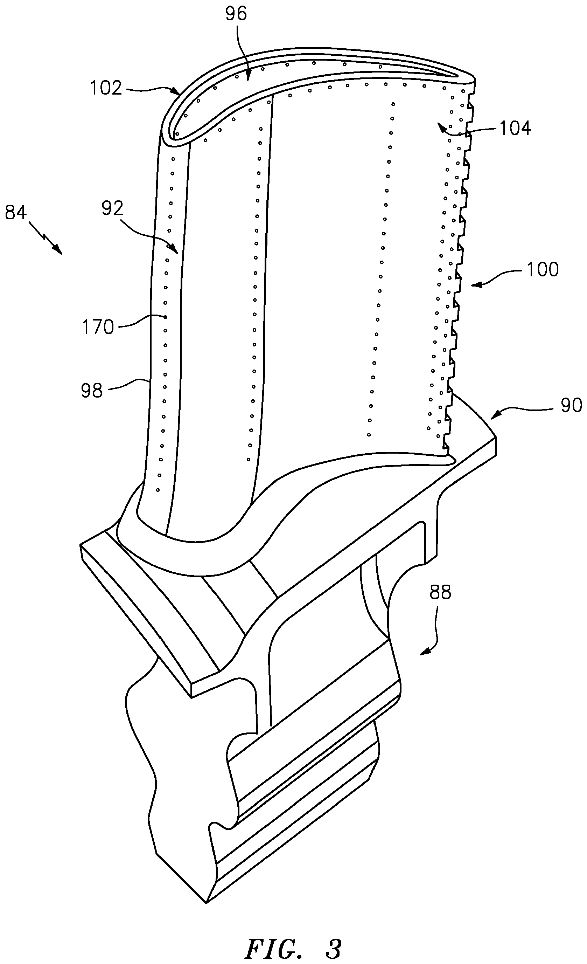

The rotor assembly 66 includes an array of blades 84 circumferentially disposed around a disk 86. Each blade 84 includes a root 88, a platform 90 and an airfoil 92 (also shown in FIG. 3). The blade roots 88 are received within a rim 94 of the disk 86 and the airfoils 92 extend radially outward such that a tip 96 of each airfoil 92 is closest to the blade outer air seal (BOAS) assembly 62. The platform 90 separates a gas path side inclusive of the airfoil 92 and a non-gas path side inclusive of the root 88.

With reference to FIG. 3, the platform 90 generally separates the root 88 and the airfoil 92 to define an inner boundary of a gas path. The airfoil 92 defines a blade chord between a leading edge 98, which may include various forward and/or aft sweep configurations, and a trailing edge 100. A first sidewall 102 that may be convex to define a suction side, and a second sidewall 104 that may be concave to define a pressure side are joined at the leading edge 98 and at the axially spaced trailing edge 100. The tip 96 extends between the sidewalls 102, 104 opposite the platform 90. It should be appreciated that the tip 96 may include a recessed portion.

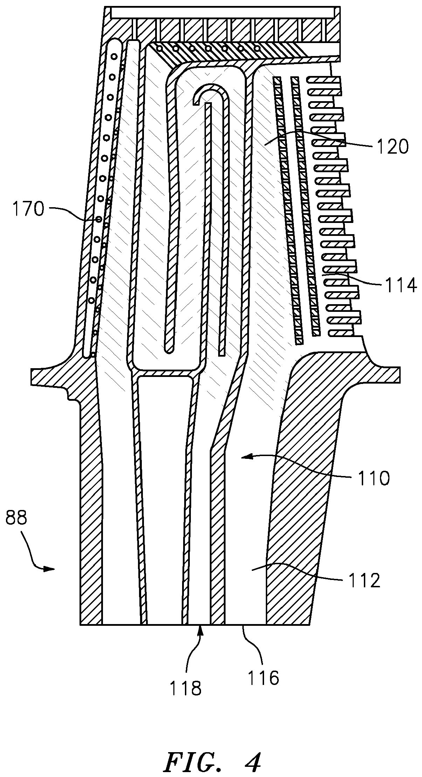

To resist the high temperature stress environment in the gas path of a turbine engine, each blade 84 may be formed by casting. It should be appreciated that although a blade 84 with an internal cooling circuit 110 (shown schematically; FIG. 4) will be described and illustrated in detail, other hot section components including, but not limited to, vanes, turbine shrouds, end walls, and other such components will also benefit here from.

With reference to FIG. 4, the internal cooling circuit 110 may include a feed passage 112 that communicates airflow into a trailing edge cavity 114 within the blade 84. It should be appreciated that the internal cooling circuit 110 may be of various geometries, and include various features. The feed passage 112 in this embodiment is the aft most passage that communicates cooling air to the trailing edge cavity 114. The feed passage 112 generally receives cooling flow through at least one inlet 116 within the base 118 of the root 88. It should be appreciated that various feed architecture, cavity, and passageway arrangements will benefit herefrom.

The tip 96 and the trailing edge 100 bound the trailing edge cavity 114 between the sidewalls 102, 104. The trailing edge cavity 114 may include a multiple of features 120. The features 120 in this disclosed non-limiting embodiment may include pedestals, strips, edge features, etc. It should be appreciated that although particular features are delineated within certain general areas, the features may be otherwise arranged or intermingled and still not depart from the disclosure herein.

A multiple of cooling holes 170, e.g., showerhead, platform, tip, etc., communicates the cooling airflow from the internal cooling circuit 110 through the wall of the blade 84. The multiple of cooling holes 170 provide external film cooling in forced convection of the blade.

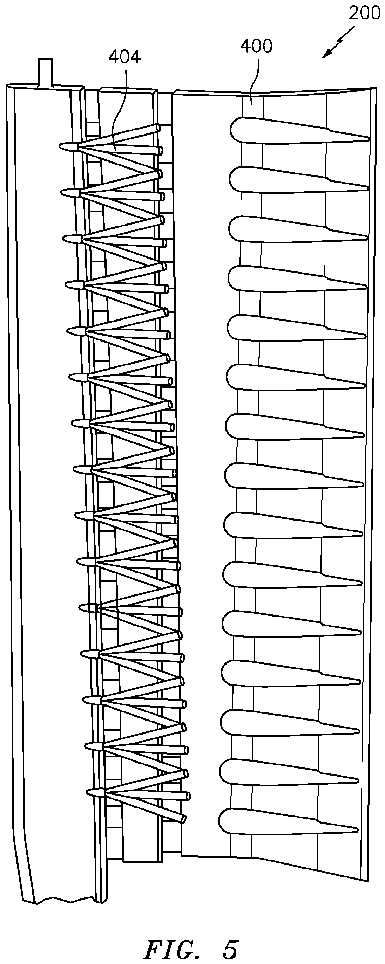

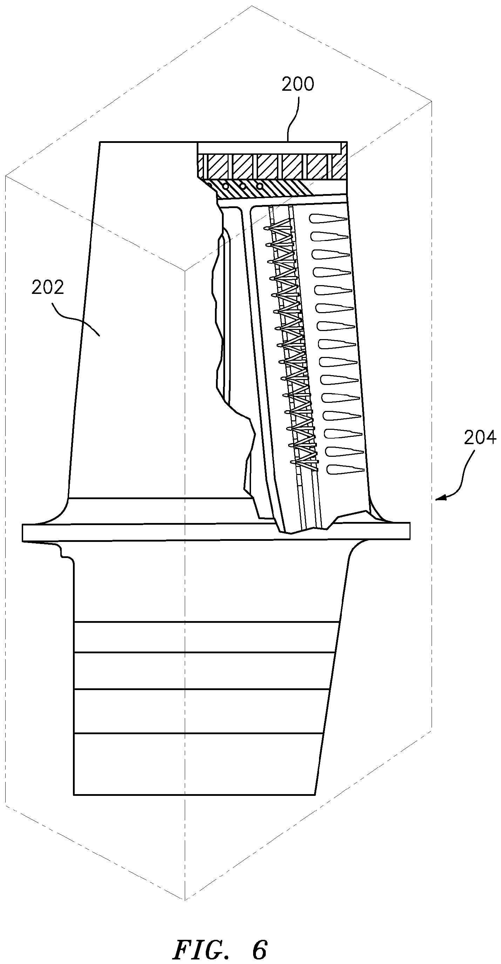

To form the internal cooling circuit 110, a core assembly 200 (FIG. 5) is positioned within a shell 202 (FIG. 6). The shell 202 defines the outer surface of the blade 84 while the core assembly 200 forms the internal surfaces such as that which defines the internal cooling circuit 110. That is, during the casting process, the core assembly 200 fills a selected volume within the shell 202 that, when removed from the finished blade casting, defines the internal cooling circuit 110 utilized for cooling airflow.

The shell 202 and the core assembly 200 together define a mold 204 to cast the complex exterior and interior geometries of the blade 84. The mold 204 operates as a melting unit and/or a die for a desired material that forms the blade 84. The desired material may include, but not be limited to, a super alloy or other material such as nickel based super alloy, cobalt based super alloy, iron based super alloy, and mixtures thereof that is melted; a molten super alloy that is then solidified; or other material. In another non-limiting embodiment, the crucible may be directly filled with a molten super alloy.

Alternatively, or in addition, a single crystal starter seed or grain selector may be utilized to enable a single crystal to form when solidifying the component. The solidification may utilize a chill block in a directional solidification furnace. The directional solidification furnace has a hot zone that may be induction heated and a cold zone separated by an isolation valve. The chill block and may be elevated into the hot zone and filled with molten super alloy. After the pour, or being molten, the chill plate may descend into the cold chamber causing a solid/liquid interface to advance from the partially molten starter seed in the form of a single crystallographic oriented component whose orientation is dictated by the orientation of the starter seed. Casting is typically performed under an inert atmosphere or vacuum to preserve the purity of the casting.

Following solidification, the shell 202 is broken away and the core assembly 200 may be removed from the solidified component by, for example, caustic leaching, to leave the finished single crystal component. After removal, machining, surface treating, coating, or any other desirable finishing operation may be performed to further finish the component.

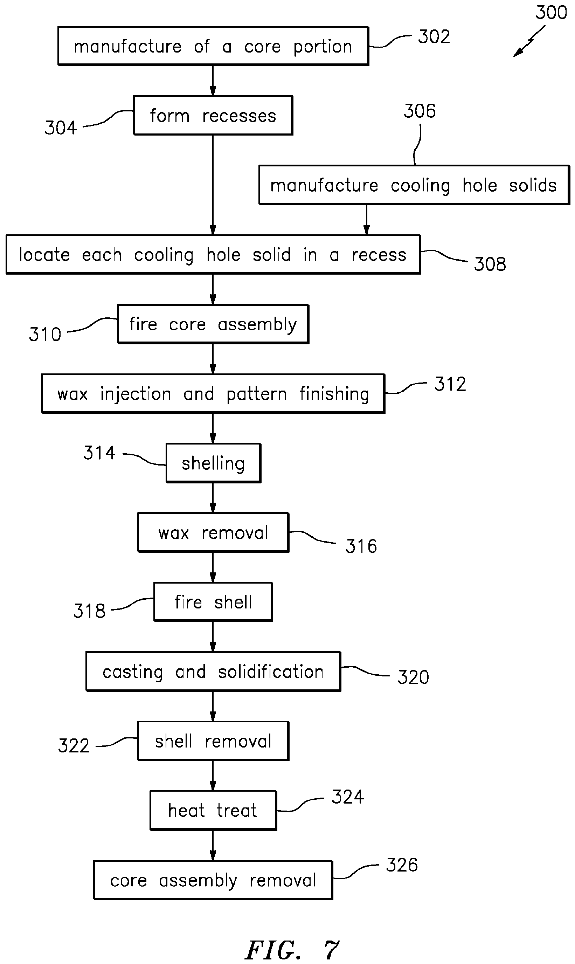

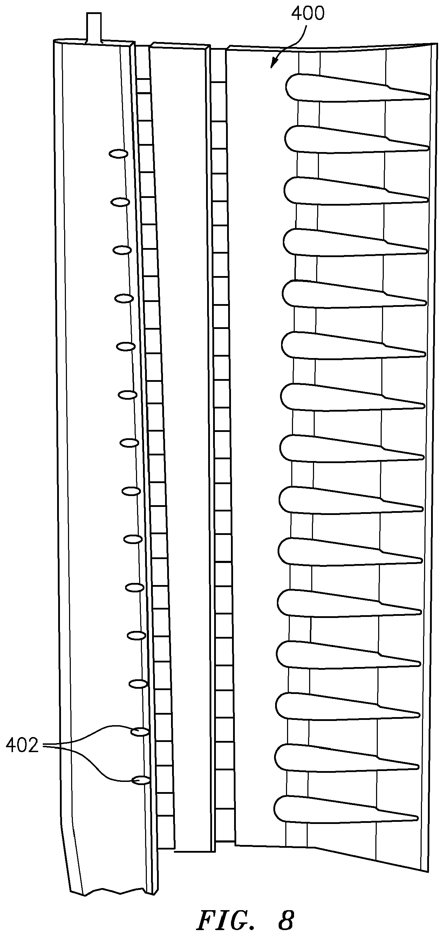

With reference to FIG. 7, one disclosed non-limiting embodiment of a method 300 to manufacture the core assembly 200 initially includes manufacture of a core portion 400 (step 302; FIG. 8). The core portion 400 may be cast, additively manufactured or produced by some other process. Alternatively, some combination of injection molding may be combined with additive manufacturing.

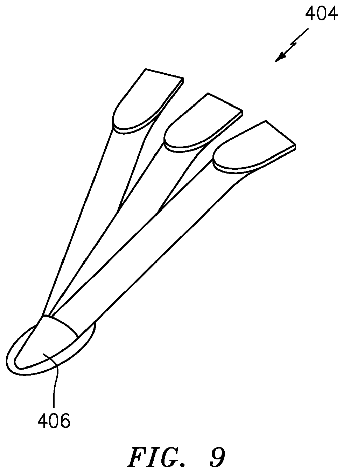

The core portion 400 includes one or more recesses 402 that are shaped to receive a cooling hole solid 404 (FIG. 9) that is at least partially received into the recess 402. The recesses 402 may be drilled, additively manufactured, or otherwise formed into the core portion 400 (step 304). The recesses 402 may be blind holes, indentations, or other shapes that extend at least partially into the core portion 400 to receive the cooling hole solid 404. The recesses 402 facilitate a proper hole meter length, size, and shape from the cooling hole solid 404 to avoid formation of a fillet and thereby minimize or prevent overflow conditions. That is, the recesses 402 avoid undesirable fillet formation.

The cooling hole solids 404 are manufactured (step 306; FIG. 9) separately from the core portion 400. That is, the cooling hole solids 404 need not be manufactured subsequent to the core portion 400 but may be manufactured prior or in parallel for later assembly (step 308). The cooling hole solid 404 forms the desired cooling hole shape (e.g., showerhead, platform, tip, tripod, etc.) in the finished component. Various film cooling hole concepts are available with shaped exits which are used to reduce the exit cooling air momentum to avoid film blow off and to increase the lateral coverage of the cooling air. These shaped exits may include complex antivortex cooling exit holes that reduce the cooling jet lift-off.

The cooling hole solid 404 may be manufactured of a material different than that of the core portion 400. For example, the cooling hole solid 404 may be manufactured of at least one of a refractory metal (e.g., niobium, molybdenum, tantalum, tungsten, and rhenium), ceramic, aluminum oxide, silicon dioxide, quartz, or hybrids thereof, while the core portion may be manufactured of silica, alumina, ceramic, or other such material.

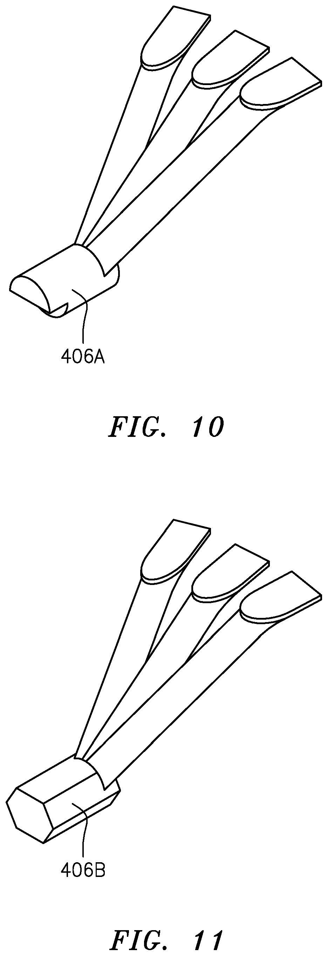

Each cooling hole solid 404 is then located (step 308) into one of the recesses 402 and held there either via a friction interference fit and/or a glue or cement such that the cooling hole solid 404 is properly rotationally oriented therein. The cooling hole solid 404 may be rotationally oriented within the recess 402 via an alignment feature 406 (FIG. 9) that corresponds with the recess 402. That is, the recess 402 and the corresponding alignment feature 406 rotationally positions the cooling hole solid 404. The alignment feature 406 may be, for example, a step feature 406A (FIG. 10), a regular convex polygon 406B (FIG. 11), or other interface that provides a rotational alignment.

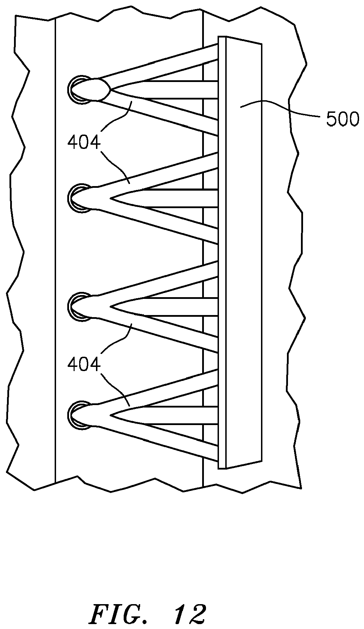

Alternatively, or in addition, the cooling hole solid 404 may include an external fixation 500 (FIG. 12) that connects a cluster of the cooling hole solids 404 to provide external support and alignment. The external fixation 500 facilitates accurate spacing arrangement of a multiple of the cooling hole solids 404. That is, the external fixation 500 ties a multiple of the cooling hole solids 404 together as a group to increase the accuracy and precision when being inserted into the recesses 402.

The core portion 400 and the multiple of cooling hole solids 404 form an internal removable edifice that ultimately forms the internal cooling circuit 110. That is, the multiple of cooling hole solids 404 are positive structure which, once the shell 202 is broken away and the core assembly 200 removed, form the cooling holes 170 in the blade 84 (FIG. 3). That is, the material formed around the multiple of cooling hole solids 404 forms walls of the cooling holes 170 once the multiple of cooling hole solids 404 are removed.

Next, the core assembly 200 is fired (step 310). That is, the core portion 400 and the multiple of cooling hole solids 404 are prepared for final disposition of the core assembly 200 within the shell 202.

Next, the core assembly 200 is subjected to wax injection and pattern finishing (step 312). Wax injection is the placement of the finished cores plus any quartz rods and support features within the wax die, and injection of the wax around the core which forms the wax pattern. The wax pattern finishing is the set of steps to prepare the as-injected wax form for casting, such as wax welding additional features and runners/gates.

Next, a ceramic and aggregate shell is formed upon the outside of the wax pattern mold (step 314). Shelling is typically performed by alternatingly dipping in a wet ceramic slurry and powdering with sand and other agents.

Next, the wax is removed from within the shell, typically using an autoclave, in the investment casting process (step 316) then the shell is fired (step 318). The firing provides for sintering of the shell mold via a high-temperature furnace following drying.

Next, the workpiece is cast and solidified (step 320). The casting is performed via the pouring of a molten alloy into the mold and subsequently controlling the cooling of the alloy between the liquid and solid states, all performed in a vacuum environment.

Next, the shell is removed (step 322). That is, the casting is physically knocked-out of the casting from the shell.

Next, the application of a heat cycle to the casting in a high-temperature furnace is performed to impart molecular and structural changes to the alloy to achieve desired grain results (step 324).

Finally, the core assembly 200 is removed (step 326). After removal, machining, surface treating, coating, or any other desirable finishing operation may be performed to further finish the component.

The core portion 400 and the multiple of cooling hole solids 404 provide a core assembly 200 to cast complicated cooling hole types (e.g., tripods, antivortex, etc.) for advanced cooling architectures as the size and shape of the cooling hole meter is readily maintained. The flow path of the cooling circuit 110 becomes fully developed for optimum cooling effectiveness and avoids fillets around the cooling hole inlet which otherwise adversely affect the hole meter size and shape.

In addition, the method reduces the scrap rate and cost for casting cooling holes.

Although particular step sequences are shown, described, and claimed, it should be appreciated that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be appreciated that within the scope of the appended claims, the disclosure may be practiced other than as specifically described. For that reason, the appended claims should be studied to determine true scope and content.

## Claims

1. A core assembly (200) for casting an internal cooling circuit (110) within a gas turbine engine component (84), the core comprising:
a core portion (400) having a recess (402); and
a cooling hole solid (404) that is at least partially received into the recess (402).

2. The core assembly (200) as recited in claim 1, wherein the core portion (400) is manufactured of a first material and the cooling hole solid (404) is manufactured of a second material, the first material different than the second material.

3. The core assembly (200) as recited in claim 1 or 2, wherein the cooling hole solid (404) is manufactured of a refractory metal.

4. The core assembly (200) as recited in any preceding claim, wherein the cooling hole solid (404) is manufactured of at least one of molybdenum, aluminum oxide, silicon dioxide, and quartz.

5. The core assembly (200) as recited in any preceding claim, wherein the cooling hole solid (404) is press fit into the recess (402) or interference fit into the recess (402).

6. The core assembly (200) as recited in any preceding claim, further comprising an alignment feature (406) to align the cooling hole solid (404) with respect to the recess (402), wherein, optionally, the alignment feature rotationally aligns the cooling hole solid within the recess.

7. The core assembly (200) as recited in any preceding claim, wherein the cooling hole solid (404) is glued into the recess (402).

8. A core assembly (200) for casting an internal cooling circuit (110) within a gas turbine engine component (84), comprising:
a core portion (400) for forming an internal cooling circuit (110) within a component (84), the core portion (400) having a multiple of recesses (402); and
a multiple of cooling hole solids (404) for forming a respective cooling hole (170) from the internal cooling circuit (110), each of the multiple of cooling hole solids (404) at least partially received into one of the multiple of recesses (402) such that each of the cooling hole solids (404) are aligned to a predefined rotational position.

9. The core assembly (200) as recited in claim 8, further comprising an alignment feature (406) that rotationally positions the cooling hole solid (404) within the recess (402) to the predefined rotational position; wherein the alignment feature (406) is optionally one of a step feature (406A) or a regular convex polygon (406B).

10. The core assembly (200) as recited in claim 8 or 9, wherein each cooling hole solid (404) is glued into the respective recess (402).

11. The core assembly (200) as recited in any preceding claim, wherein the cooling hole solid (404) or each of the cooling hole solids (404) comprises a tripod hole geometry.

12. A method of manufacturing a core assembly (200) for casting an internal cooling circuit (110) within a gas turbine engine component (84), the method comprising:
forming a core portion (400) for forming an internal cooling circuit (110) within a component (84);
forming a multiple of recesses (402) within the core portion (400); and
locating a cooling hole solid (404) into each of the multiple of recesses (402), each of the cooling hole solids (404) for forming a respective cooling hole (170) from the internal cooling circuit (110).

13. The method as recited in claim 12, wherein locating the cooling hole solid (404) comprises rotationally aligning each of the cooling hole solids (404) such that each of the cooling hole solids (404) are aligned to a predefined rotational position.

14. The method as recited in claim 12 or 13, wherein locating the cooling hole solid (404) comprises gluing the cooling hole solid (404) into the recess (402).

15. The method as recited in any of claims 12 to 14, wherein forming the core portion (400) comprises additively manufacturing the core portion (400) with the multiple of recesses (402).
